# EUROPÄISCHE PATENTSCHRIFT

(11) **EP 1 642 057 B1**
(45) Veröffentlichungstag und Bekanntmachung des Hinweises auf die Patenterteilung: **13.08.2008**
(21) Anmeldenummer: 04763022.3
(22) Anmeldetag: 24.06.2004
(51) Int. Cl.: F16L 33/34, F16L 33/26, F16L 51/02, F16L 27/111

(54) **ANSCHLUSSVERBINDUNG FÜR RINGGEWELLTE SCHLAUCHLEITUNGEN**
CONNECTION PIECE FOR CORRUGATED FLEXIBLE PIPES
RACCORDEMENT POUR CONDUITES EN TUYAUX FLEXIBLES ANNELES

(30) Priorität: 03.07.2003 DE 20310239 U
(43) Veröffentlichungstag der Anmeldung: 05.04.2006
(73) Patentinhaber: Witzenmann GmbH, 75175 Pforzheim (DE)
(72) Erfinder: BRUNS, Claas, 75203 Königsbach-Stein (DE); BURKHARDT, Carlo, 75331 Grunbach (DE); MAUCH, Stefan, 75305 Neuenbürg (DE)
(74) Vertreter: Blumenröhr, Dietrich
(86) Internationale Anmeldenummer: PCT/EP2004/006819
(87) Internationale Veröffentlichungsnummer: WO 2005/003612

(56) Entgegenhaltungen:
- DE-A- 10 014 560
- US-A- 2 216 468
- US-A- 5 819 807

## Beschreibung

Die Erfindung betrifft eine Anschlussverbindung für ringgewellte Schlauchleitungen mit einem hohlzylindrischen Anschlusselement, insbesondere Anschlussrohr, wobei ein axiales Ende der Schlauchleitung durch stoffschlüssige Verbindung an dem Anschlusselement festgelegt ist, wobei das Schlauchleitungsende in seinem endständigen Bereich in Radialrichtung aufgeweitet ist, wobei das Anschlusselement in den aufgeweiteten Bereich der Schlauchleitung eingesteckt ist, wobei im Überlappungsbereich die Schlauchleitung zumindest partiell am Anschlusselement festgelegt ist, und wobei die Schlauchleitung am Anschlusselement im gegenseitigen Anlagebereich einer radial aufgeweiteten Innenkrempe durch die stoffschlüssige Verbindung festgelegt ist.

Im Stand der Technik sind verschiedenste Bauformen zur Herstellung einer solchen Anschlussverbindung bekannt; so beschreibt beispielsweise DE-A-38 22 064, wie das Anschlussstück im Anschlussbereich einen sich endständig zu einer schmalen Kante verjüngenden Bund aufweist, an den die endständige Kante der Schlauchleitung angeschweißt ist. Ein solches als Drehteil hergestelltes Anschlusselement ist jedoch zum einen teuer und zum anderen ist auch die Schweißverbindung der beiden Kanten von Schlauchleitung und Anschlusselement in mechanischer Hinsicht nicht ausreichend fest, um insbesondere großen Biegebelastungen stand zu halten, wie sie z. B. bei Kraftfahrzeuganwendungen in Kraftstoffleitungen, Klimaleitungen etc. auftreten.

Darüber hinaus ist es im Stand der Technik bekannt, ein solches als Drehteil hergestelltes Anschlussstück durch ein einfacher ausgeführtes Anschlusselement mit einer ebenen Stirnfläche zu ersetzen und hierbei die endständige Kante der Schlauchleitung beispielsweise an der Außenkante der Stirnfläche des Anschlusselementes anzuschweißen. Da jedoch in diesem Fall das Anschlusselement eine weitaus größere Materialdicke besitzt als die Schlauchleitung, ist einerseits eine erhebliche Materialanhäufung im Schweißbereich möglich und andererseits die Bildung von Kerben, Spalten oder Hohlräumen nicht ausgeschlossen, die zu Spannungsüberhöhungen im Kerbbereich und damit zu einem Abreißen der Anschlussverbindung und darüber hinaus auch zu der Entstehung von Spaltkorrosion führen können.

Weiterhin ist in der DE-A-100 14 560 offenbart, wie ein axiales Ende einer Schlauchleitung mittels einer Laserschweißnaht an einer Querschnittserweiterung (in Form einer ringwellförmigen Aufstauchung) eines Anschlussstutzens festgelegt wird. Hierbei wird die Schlauchleitung im Bereich der radialen Mitte der letzten Wellenflanke abgetrennt und an einer im Wesentlichen radial verlaufenden Wandung der Querschnittserweiterung axial angeschweißt. Aber auch dieser Anschlussstutzen mit eingeformter Querschnittserweiterung ist hinsichtlich seiner Herstellung natürlich weitaus komplizierter und aufwendiger als ein aus einem Rohr bestehendes Anschlusselement und wird lediglich aus dem Grund verwendet, einem nachträglich über die Schlauchleitung zu legenden und am Anschlussstutzen festzulegenden Geflechtsschlauch als Radialabstützung zu dienen. Hierbei nimmt die Querschnittserweiterung die Kräfte auf, die sich aus der Umlenkung des Geflechtsschlauchendes im Bereich der endständigen Wellen der Schlauchleitung ergeben und die ansonsten von zumindest der letzten Welle aufgenommen werden müssten, wodurch sich dort ein erheblicher Reibverschleiss und größere Spannungen bis hin zum Bruch der Schlauchleitung in diesem belasteten Bereich ergeben würden.

Aus der dem Oberbegriff entsprechenden US 2,216,468 ist eine Anschlussverbindung für ringgewellte Schlauchleitungen bekannt, bei der die Schlauchleitung im Bereich der letzten endständigen Welle umgeformt, insbesondere aufgeweitet wurde und stoffschlüssig am Anschlusselement festgelegt ist.

Die US 5,819,807 zeigt ebenfalls eine Anschlussverbindung für ringgewellte Schlauchleitungen, bei welcher letztere im Bereich der letzten endständigen Welle aufgeweitet und an dem Anschlusselement festgelegt ist.

Neben der Möglichkeit, die Anschlussverbindung mittels einer stoffschlüssigen Verbindung herzustellen, gibt es im Stand der Technik natürlich auch ausreichend Vorschläge, eine ringgewellte Schlauchleitung an einem Anschlusselement mittels form- oder kraftschlüssigen Verbindungen, beispielsweise Schraubverbindungen festzulegen.

All die erwähnten Verbindungsarten besitzen jedoch den Nachteil, dass Sie entweder aufwändig in der Herstellung der Einzelteile und in der Automatisierung der Herstellung der Anschlussverbindung sind oder dass sie mechanisch nicht ausreichend prozesssicher für Beanspruchungen sind, wie sie beispielsweise in schwingungsbelastenden Kraftstoffleitungen, Klimaleitungen etc. auftreten.

Der vorliegenden Erfindung liegt hiervon ausgehend die Aufgabe zugrunde, eine Anschlussverbindung der eingangs genannten Art zur Verfügung zu stellen, die sich durch einen einfachen Aufbau, eine einfache Herstellbarkeit und eine einfachere Automatisierbarkeit auszeichnet und darüber hinaus auch mechanisch ausreichend stabil ist. Die Erfindung ist durch die Merkmale des unabhängigen Anspruchs definiert; weitere Merkmale der Erfindung sind in den unteransprüchen 3 angegeben. Hierdurch wird ein zylindrischer Anlagebereich geschaffen, mit dem das aufgeweitete Schlauchleitungsende flächig von außen am Anschlusselement anliegt und in dem die stoffschlüssige Verbindung vorgesehen werden kann, wodurch sich eine äußerst stabile und belastbare Anschlussverbindung herstellen lässt. Darüber hinaus müssen die beiden aneinander festzulegenden Bauteile im Anschlussbereich keinen allzu großen Genauigkeitsanforderungen bezüglich ihrer Durchmesser genügen, da das verformte Schlauchleitungsende in Radialrichtung eine gewisse Restelastizität aufweist und hierdurch einen beträchtlichen Toleranzausgleich ermöglicht. So kann beispielsweise ein hinsichtlich seines Außendurchmessers geringfügig größer dimensioniertes Anschlusselement in ein aufgeweitetes Schlauchleitungsende mit entsprechend geringfügig kleiner dimensioniertem Innendurchmesser eingesteckt und hierbei das Schlauchleitungsende leicht elastisch aufgeweitet werden.

Da das Anschlusselement im vorliegenden Fall aus einem einfachen Rohr bestehen kann und auch das Aufweiten des Schlauchleitungsendes beispielsweise mit Hilfe eines Spreizdorns oder eines anderen verwandten Fertigungsverfahrens in einfacher Weise erfolgen kann, sind die aneinander festzulegenden Bauteile weder teuer in der Herstellung, noch kompliziert im Aufbau und können auch problemlos weiter verarbeitet werden, indem sie nach dem Aufweiten des Schlauchleitungsendes ineinander gesteckt und miteinander verschweißt werden.

Der für die stoffschlüssige Verbindung bevorzugte zylindrische Anlagebereich des Schlauchleitungsendes am Anschlusselement entsteht erfindungsgemäß dadurch, dass zumindest die letzten beiden endständigen Wellen aufgeweitet werden, wodurch dann die vorletzte radial aufgeweitete Innenkrempe in größtem Maße verformt (das heißt gegenüber dem ursprünglichen unverformten Zustand hinsichtlich des Innendurchmessers vergrößert) ist und den zylindrischen Anschlussbereich (der vor dem Verformen der ursprünglichen sinus- oder omegaförmigen Wellenform entsprechend z.B. konvex gebogen war) bildet, der mittels Schweiß- oder auch mittels Lötverbindung stoffschlüssig festgelegt werden kann. Dadurch wird die axiale Länge des ursprünglich linienförmig über den Umfang umlaufenden Bereichs mit minimalem Innendurchmesser deutlich vergrößert und damit der zylindrische Anschlussbereich hergestellt.

Für die Anschlussverbindung ist es möglich, lediglich Schlauchleitungsende und Anschlusselement miteinander zu verschweißen, ebenso kann jedoch ein Ring oder ein vergleichbares Element wie ein Draht, ein Bandmaterial etc. oder ein sonstiger Zusatzwerkstoff in die stoffschlüssige Verbindung mit einbezogen sein. Hierbei ist es bei Verwendung eines Ringelementes vorteilhaft, wenn dieses im Festlegungsbereich der Schlauchleitung am Anschlusselement an der radialen Außenseite des im Bereich zumindest der letzten endständigen Welle aufgeweiteten Schlauchleitungsendes anliegt. Dieses Ringelement kann zur Aufbringung einer von außen nach innen durch die drei Bauteile sich erstreckenden radialen Schweißnaht dienen oder auch zur Aufbringung einer axialen Schweißnaht im Bereich der endständigen Kante der Schlauchleitung und des in diesem Bereich angeordneten Randes des Ringelementes.

Wird die vorliegende Schlauchleitung auf der radialen Außenseite direkt oder mittelbar von einem Geflechtsschlauch umgeben, so kann sowohl das erwähnte Ringelement oder das vergleichbare Element als auch die letzte Welle - also die endständige Außenkrempe, die axial neben der den zylindrischen Anlagebereich bildenden radial aufgeweiteten vorletzten Innenkrempe liegt - als Radialabstützung für den Geflechtsschlauch im Sinne der Querschnittserweiterung des Anschlussstutzens der DE-A 100 14 560 dienen und so bei dessen radialer Umlenkung (vom Durchmesserbereich radial außerhalb der Schlauchleitung in Richtung seiner auf einem kleineren Durchmesserbereich liegenden Festlegungspositionen am Anschlusselement) die Kräfte von der letzten Welle der Schlauchleitung abhalten.

Was die Größenverhältnisse der einzelnen Bauteile betrifft, so empfiehlt es sich, dass der Innendurchmesser des Anschlusselements zumindest in etwa dem lichten Innendurchmesser der Schlauchleitung im nicht aufgeweiteten Bereich entspricht, dass der Außendurchmesser des Anschlusselements in etwa dem lichten Innendurchmesser der Schlauchleitung im radial aufgeweiteten Bereich entspricht, dass der lichte Innendurchmesser der Schlauchleitung im aufgeweiteten Bereich größer ist als der neutrale Durchmesser, also der Durchmesser in halber Krempenhöhe im nicht aufgeweiteten Bereich und/oder dass der Außendurchmesser des aufgeweiteten Schlauchleitungsendes zumindest in etwa dem Außendurchmesser des Schlauchleitungsendes im nicht aufgeweiteten Bereich entspricht.

Hinsichtlich der Herstellung der Anschlussverbindung und insbesondere deren Automatisierung ist es besonders vorteilhaft, dass das Schlauchleitungsende im nicht aufgeweiteten Bereich quasi automatisch als Anschlag für das Einstecken des Anschlusselementes fungiert, indem dieses an einer inneren Wellenflanke des nicht aufgeweiteten Bereichs anstößt, wenn es in die aufgeweitete Schlauchleitung eingesteckt wird.

Weitere Merkmale und Vorteile der vorliegenden Erfindung ergeben sich aus der nachfolgenden Beschreibung zweier Ausführungsbeispiele anhand der Zeichnungen; hierbei zeigen
- Figur 1: ein erfindungsgemäß aufgeweitetes Schlauchleitungsende zur Herstellung der Anschlussverbindung im Axialschnitt;
- Figur 2: das Schlauchleitungsende aus Figur 1 mit eingestecktem Anschlusselement, ebenfalls im Axialschnitt; und
- Figur 3: eine zur Erfindung nicht gehörende alternative Verbindungsart des Schlauchleitungsendes aus Figur 1 mit einem eingesteckten Anschlusselement im Axialschnitt.

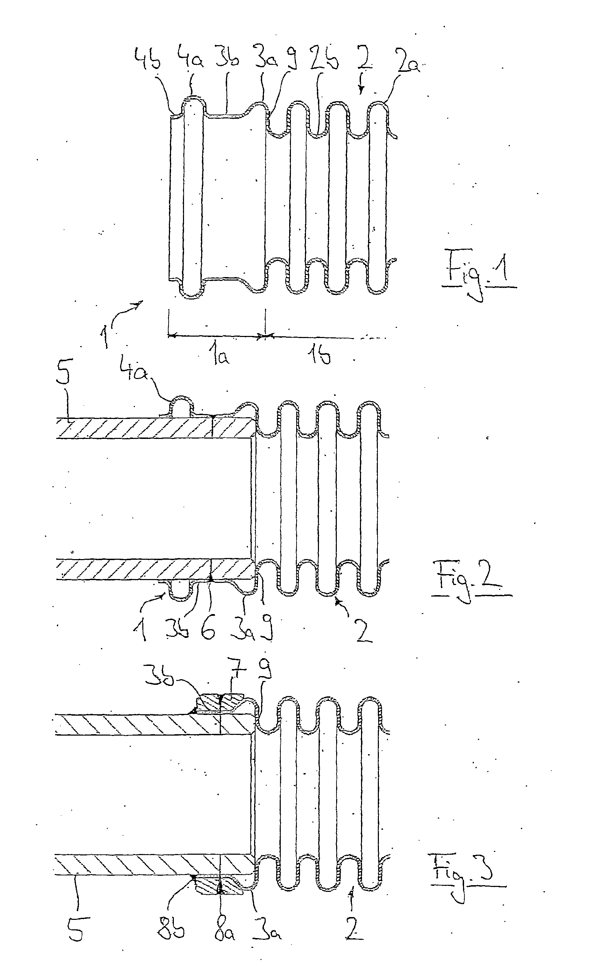

In Figur 1 ist ein Schlauchleitungsende 1 mit einem endständigen radial aufgeweiteten Bereich 1a und einem nicht aufgeweiteten Bereich 1 b dargestellt. Das Schlauchleitungsende 1 ist Teil eines ringgewellten Metallschlauches 2 mit Außenkrempen 2a und Innenkrempen 2b. Der radial aufgeweitete Bereich 1 a erstreckt sich über die letzten beiden endständigen Wellen 3, 4 mit jeweils Außenkrempen 3a, 4a und Innenkrempen 3b, 4b.

Der für die Erfindung wesentliche Bereich ist die aufgeweitete vorletzte Innenkrempe 3b, die durch das Aufweiten mittels eines Spreizdorns oder mittels eines ähnlichen Umformungsverfahrens eine im Wesentlichen zylindrische Form erhält und hierdurch einen flächigen Anschlussbereich für das in Figur 2 dargestellte Anschlusselement 5 bildet. Dieses Anschlusselement 5 besteht aus einem einfachen Rohr, dessen Innendurchmesser in etwa dem lichten Innendurchmesser der Schlauchleitung 2 im nicht aufgeweiteten Bereich, also dem Innendurchmesser der Innenkrempen 2b entspricht. Der Außendurchmesser des Anschlusselementes 5 ist gleich oder geringfügig größer als der Innendurchmesser der aufgeweiteten Innenkrempe 3b. So legt sich dieser zylindrische Anschlussbereich der Innenkrempe 3b flächig an das Anschlusselement 5 an und ermöglicht in diesem Bereich das Einbringen einer umlaufenden Schweißnaht 6.

Die freie Kante des Schlauchleitungsendes 1 im Bereich der Innenkrempe 4b ist im vorliegenden Ausführungsbeispiel nicht mit dem Anschlusselement 5 verschweißt, sondern stützt sich lediglich an dem Anschlusselement ab und unterstützt die gegenseitige Anlage.

Aus der zur Erfindung nicht gehörenden Ausführungsform gemäß Figur 3 ist zu erkennen, dass dieser Bereich der Innenkrempe 4b sogar dadurch vom Schlauchleitungsende 1 entfernt worden ist, dass dieses im Bereich hinter der vorletzten Innenkrempe 3b abgetrennt ist und im Bereich der Innenkrempe 3b radial außen von einem Ringelement 7 beaufschlagt ist. Anschlusselement 5, Schlauchleitung 2 und Ringelement 7 können somit im gegenseitigen Überlappungsbereich entweder durch eine sich in Radialrichtung erstreckende Schweißnaht 8a oder eine axial am äußersten Rand der Schlauchleitung 2 sowie des Ringelements 7 angebrachte Axialschweißnaht 8b miteinander verbunden werden.

Schließlich zeigen die Figuren 2 und 3, wie die letzte Wellenflanke 9 des nicht aufgeweiteten Bereichs 1b der Schlauchleitung 2 als Anschlag für das in den aufgeweiteten Bereich 1a eingesteckte Anschlusselement 5 dient und sicherstellt, dass die Schweißverbindungen 6, 8a oder 8b an der richtigen Position angebracht werden, selbst wenn man bei eingestecktem Anschlusselement 5 von außen nicht ohne Weiteres feststellen kann, wie weit das Anschlusselement 5 in die Schlauchleitung 2 eingesteckt ist.

Im Ausführungsbeispiel der Figur 2 sowie in der o.g. nicht zur Erfindung gehörenden Ausführungsform gemäß Figur 3, besitzt das Anschlusselement 5 eine radiale Dicke, die in etwa der halben Krempenhöhe, also dem Unterschied zwischen dem Radius der Außenkrempen 2a und dem Radius der Innenkrempen 2b entspricht und demgemäß ist der Innendurchmesser der aufgeweiteten Innenkrempe 3b gleich oder etwas größer als der neutrale Krempendurchmesser im Wendepunkt der Flankensteigungen, also auf dem Niveau der halben Krempenhöhe.

Aus den Axialschnitten der Figuren 2 und 3 kann man leicht entnehmen, dass die letzte Außenkrempe 4a oder auch das Ringelement 7 als Radialabstützung für einen Geflechtsschlauch dienen könnte, der auf der Außenseite der Schlauchleitung 2 angeordnet und an dem Anschlusselement 5 in einem (bezogen auf die Figuren 2 und 3 links von den Festlegungspositionen der Schlauchleitung am Anschlusselement liegenden) Bereich festgelegt wird, der einen geringeren Durchmesser als die Außenmesser der Außenkrempen der Schlauchleitung 2 aufweist, so dass der Geflechtsschlauch im Bereich der letzten Außenkrempe 4a bzw. des Ringelements 7 von einer nahezu achsparallelen Erstreckung hin zu einer schräg auf den geringeren Durchmesser des Anschlusselements 5 gerichteten Erstreckung umgelenkt wird.

Da die letzte Außenkrempe 4a aufgrund der Schweißverbindung 6 von dem restlichen Bereich der Schlauchleitung 2 kräftemäßig entkoppelt ist, kann sie problemlos die Umlenkungskräfte des Geflechtsschlauchs aufnehmen, ohne dass dies zu einer Qualitätseinbuße der Anschlussverbindung oder gar zu einer Reduzierung der Belastbarkeit der Schlauchleitung führen würde.

Zusammenfassend ermöglicht die erfindungsgemäße Anschlussverbindung eine einfach herstellbare, einfach aufgebaute und dennoch mechanisch hoch belastbare Verbindung einer ringgewellten Schlauchleitung mit einem hohlzylindrischen Anschlusselement.

## Patentansprüche

1. Anschlussverbindung für ringgewellte Schlauchleitungen (2) mit einem hohlzylindrischen Anschlusselement (5), insbesondere Anschlussrohr, wobei ein axiales Ende (1) der Schlauchleitung (2) durch stoffschlüssige Verbindung (6, 8a, 8b) an dem Anschlusselement (5) festgelegt ist, wobei das Schlauchleitungsende (1) in seinem endständigen Bereich (1a) in Radialrichtung aufgeweitet ist, wobei das Anschlusselement (5) in den aufgeweiteten Bereich (1a) der Schlauchleitung (2) eingesteckt ist, wobei im Überlappungsbereich die Schlauchleitung zumindest partiell am Anschlusselement festgelegt ist, und wobei die Schlauchleitung (2) am Anschlusselement (5) im gegenseitigen Anlagebereich einer radial aufgeweiteten Innenkrepme (3b) durch die stoffschlüssige Verbindung (6, 8a, 8b) festgelegt ist,
**dadurch gekennzeichnet,**
**dass** die Schlauchleitung (2) zumindest im Bereich der letzten beiden endständigen Wellen (3, 4) radial aufgeweitet ist.

2. Anschlussverbindung nach Anspruch 1,
**dadurch gekennzeichnet,**
**dass** die Schlauchleitung (2) am Anschlusselement (5) im gegenseitigen Anlagebereich der vorletzten radial aufgeweiteten Innenkrempe (3b) durch die stoffschlüssige Verbindung (6, 8a, 8b) festgelegt ist.

3. Anschlussverbindung nach einem der vorstehenden Ansprüche,
**dadurch gekennzeichnet,**
**dass** das Schlauchleitungsende (1) zumindest in Teilbereichen derart verformt ist, dass auf seiner Innenseite ein zylindrischer flächiger Anlagebereich (3b) für das Anschlusselement gebildet ist, in welchem die stoffschlüssige Verbindung (6, 8a, 8b) vorgesehen ist.

4. Anschlussverbindung nach einem der vorstehenden Ansprüche,
**dadurch gekennzeichnet,**
**dass** im Festlegungsbereich der Schlauchleitung (2) am Anschlusselement (5) ein zusätzliches Ringelement (7) vorgesehen ist, das an der radialen Außenseite des im Bereich zumindest der letzten endständigen Welle (3, 4) aufgeweiteten Schlauchleitungsendes (1) anliegt und in die stoffschlüssige Verbindung (6, 8a, 8b) zwischen Schlauchleitung und Anschlusselement mit einbezogen ist.

5. Anschlussverbindung nach einem der vorstehenden Ansprüche,
**dadurch gekennzeichnet,**
**dass** der Innendurchmesser des Anschlusselements (5) zumindest in etwa dem lichten Innendurchmesser der Schlauchleitung (2) im nicht aufgeweiteten Bereich (1 b) entspricht.

6. Anschlussverbindung nach einem der vorstehenden Ansprüche,
**dadurch gekennzeichnet,**
**dass** der Außendurchmesser des Anschlusselements (5) in etwa dem lichten Innendurchmesser der Schlauchleitung (2) im radial aufgeweiteten Bereich (1 a) entspricht.

7. Anschlussverbindung nach einem der vorstehenden Ansprüche,
**dadurch gekennzeichnet,**
**dass** der lichte Innendurchmesser der Schlauchleitung (2) im aufgeweiteten Bereich (1a) größer ist als der neutrale Durchmesser im nicht aufgeweiteten Bereich (1b).

8. Anschlussverbindung nach einem der vorstehenden Ansprüche,
**dadurch gekennzeichnet,**
**dass** der Außendurchmesser des aufgeweiteten Schlauchleitungsendes (1a) zumindest in etwa dem Außendurchmesser des Schlauchleitungsendes (1) im nicht aufgeweiteten Bereich (1 b) entspricht.

9. Anschlussverbindung nach einem der vorstehenden Ansprüche,
**dadurch gekennzeichnet,**
**dass** die stoffschlüssige Verbindung (6, 8a, 8b) zwischen Schlauchleitung (2) und Anschlusselement (5) aus einer Schweiß- oder Lötverbindung besteht.

10. Anschlussverbindung nach einem der vorstehenden Ansprüche,
**dadurch gekennzeichnet, dass** die Schlauchleitung (2) ein mechanisch gewellter Metallschlauch ist.

11. Anschlussverbindung nach einem der vorstehenden Ansprüche,
**dadurch gekennzeichnet,**
**dass** das Schlauchleitungsende (1) im nicht aufgeweiteten Bereich (1b) mit einer inneren Wellenflanke (9) als Anschlag für das Einstecken des Anschlusselements (5) in die Schlauchleitung (2) fungiert.

12. Anschlussverbindung nach zumindest Anspruch 1 oder Anspruch 4,
**dadurch gekennzeichnet,**
**dass** die Schlauchleitung auf ihrer radialen Außenseite zumindest mittelbar von einem Geflechtsschlauch umgeben ist, welcher an dem Anschlusselement axial benachbart vom Festlegungsbereich der Schlauchleitung festgelegt ist und dass der endständige aufgeweitete Bereich der Schlauchleitung oder das zusätzliche Ringelement als Radialabstützung für den Geflechtsschlauch bei dessen radialer Umlenkung in Richtung seiner Festlegungsposition am Anschlusselement dient.

## Claims

1. Connection for hoses (2) with circular corrugations having a hollow cylindrical connecting element (5), in particular a connecting pipe, wherein an axial end (1) of the hose (2) is fixed on the connecting element (5) by material engagement (6, 8a, 8b), wherein the end (1) of the hose is enlarged in the radial direction in its terminal region (1a), wherein the connecting element (5) is inserted into the enlarged region (1a) of the hose (2), wherein in the overlap region the hose is at least partially fixed on the connecting element, and wherein the hose (2) is fixed on the connecting element (5) in the mutual contact region of a radially enlarged inner flute (3b) by the material engagement (6, 8a, 8b), **characterised in that** the hose (2) is radially enlarged at least in the region of the last two terminal corrugations (3, 4).

2. Connection as claimed in Claim 1, **characterised in that** the hose (2) is fixed on the connecting element (5) in the mutual contact region of the penultimate radially enlarged inner flute (3b) by the material engagement (6, 8a, 8b).

3. Connection as claimed in any one of the preceding claims, **characterised in that** the end (1) of the hose is deformed at least in part-regions in such a way that on its inner face a cylindrical planar contact region (3b) for the connecting element is formed in which the material engagement (6, 8a, 8b) is provided.

4. Connection as claimed in any one of the preceding claims, **characterised in that** in the fixing region of the hose (2) on the connecting element (5) an additional ring element (7) is provided which rests on the radial outer face of the end (1) of the hose which is enlarged in the region of at least the last terminal corrugation (3, 4) and is included in the material engagement (6, 8a, 8b) between the hose and the connecting element.

5. Connection as claimed in any one of the preceding claims, **characterised in that** the internal diameter of the connecting element (5) corresponds at least approximately to the internal diameter of the hose (2) in the region (1b) which is not enlarged.

6. Connection as claimed in any one of the preceding claims, **characterised in that** the external diameter of the connecting element (5) corresponds at least approximately to the internal diameter of the hose (2) in the radially enlarged region (1 a).

7. Connection as claimed in any one of the preceding claims, **characterised in that** the internal diameter of the hose (2) in the enlarged region (1a) is greater than the neutral diameter in the region (1b) which is not enlarged.

8. Connection as claimed in any one of the preceding claims, **characterised in that** the external diameter of the enlarged end (1a) of the hose corresponds at least approximately to the external diameter of the end (1) of the hose in the region (1b) which is not enlarged.

9. Connection as claimed in any one of the preceding claims, **characterised in that** the material engagement (6, 81, 8b) between the hose (2) and the connecting element (5) consists of a welded or soldered connection.

10. Connection as claimed in any one of the preceding claims, **characterised in that** the hose (2) is a mechanically corrugate metal hose.

11. Connection as claimed in any one of the preceding claims, **characterised in that** an inner corrugation flank (9) of the end (1) of the hose in the region (1b) which is not enlarged functions as a stop for the insertion of the connecting element (5) into the hose (2).

12. Connection as claimed in at least Claim 1 or Claim 4, **characterised in that** on its radially outer face the hose is surrounded at least indirectly by a braided hose which is fixed on the connecting element axially adjacent to the fixing region of the hose, and that the terminal enlarged region of the hose or the additional ring element serves as a radial support for the braided hose when it is deflected radially in the direction of its fixing position on the connecting element.

## Revendications

1. Dispositif de raccordement pour conduits flexibles annelés (2), comportant un élément de raccordement (5) cylindrique creux, notamment une tubulure de raccordement, une extrémité axiale (1) du conduit flexible (2) étant arrêtée par solidarisation matérielle (6, 8a, 8b) sur l'élément de raccordement (5), l'extrémité (1) du conduit flexible étant évasée dans le sens radial dans sa région extrême (1a), l'élément de raccordement (5) étant emboîté dans la région évasée (1a) du conduit flexible (2), sachant que ledit conduit flexible est bloqué au moins partiellement à demeure sur l'élément de raccordement, dans la zone de chevauchement, et sachant que ledit conduit flexible (2) est consigné à demeure sur ledit élément de raccordement (5), par la solidarisation matérielle (6, 8a, 8b), dans la zone de contact mutuel d'un rebord intérieur (3b) évasé radialement,
**caractérisé par le fait**
**que** le conduit flexible (2) est évasé, dans le sens radial, au moins dans la région des deux dernières ondulations (3, 4).

2. Dispositif de raccordement selon la revendication 1,
**caractérisé par le fait**
**que** le conduit flexible (2) est verrouillé à demeure sur l'élément de raccordement (5), par la solidarisation matérielle (6, 8a, 8b), dans la zone de contact mutuel de l'avant-dernier rebord intérieur (3b) évasé radialement.

3. Dispositif de raccordement selon l'une des revendications précédentes,
**caractérisé par le fait**
**que** l'extrémité (1) du conduit flexible est déformée, au moins dans des régions partielles, de manière à donner naissance, sur sa face intérieure, à une zone cylindrique aplatie de contact (3b) destinée à l'élément de raccordement et dans laquelle la solidarisation matérielle (6, 8a, 8b) est prévue.

4. Dispositif de raccordement selon l'une des revendications précédentes,
**caractérisé par le fait**
**qu'**il est prévu, dans la zone de verrouillage à demeure du conduit flexible (2) sur l'élément de raccordement (5), un élément annulaire additionnel (7) qui porte contre la face extérieure radiale de l'extrémité (1) du conduit flexible évasée dans la région d'au moins la dernière ondulation extrême (3, 4), et qui fait partie intégrante de la solidarisation matérielle (6, 8a, 8b) entre le conduit flexible et l'élément de raccordement.

5. Dispositif de raccordement selon l'une des revendications précédentes,
**caractérisé par le fait**
**que** le diamètre intérieur de l'élément de raccordement (5) correspond, au moins pour l'essentiel, au diamètre intérieur du conduit flexible (2) dans la région (1 b) non évasée.

6. Dispositif de raccordement selon l'une des revendications précédentes,
**caractérisé par le fait**
**que** le diamètre extérieur de l'élément de raccordement (5) correspond, sensiblement, au diamètre intérieur du conduit flexible (2) dans la région (1a) évasée radialement.

7. Dispositif de raccordement selon l'une des revendications précédentes,
**caractérisé par le fait**
**que** le diamètre intérieur du conduit flexible (2) est plus grand, dans la région évasée (1a), que le diamètre neutre dans la région (1b) non évasée.

8. Dispositif de raccordement selon l'une des revendications précédentes,
**caractérisé par le fait**
**que** le diamètre extérieur de l'extrémité évasée (1a) du conduit flexible correspond, au moins pour l'essentiel, au diamètre extérieur de l'extrémité (1) dudit conduit flexible dans la région (1b) non évasée.

9. Dispositif de raccordement selon l'une des revendications précédentes,
**caractérisé par le fait**
**que** la solidarisation matérielle (6, 8a, 8b), entre le conduit flexible (2) et l'élément de raccordement (5), se présente comme une solidarisation soudée ou brasée.

10. Dispositif de raccordement selon l'une des revendications précédentes,
**caractérisé par le fait**
**que** le conduit flexible (2) est un flexible métallique annelé mécaniquement.

11. Dispositif de raccordement selon l'une des revendications précédentes,
**caractérisé par le fait**
**que** l'extrémité (1) du conduit flexible remplit dans la région (1 b) non évasée, par un flanc intérieur (9) d'ondulation, la fonction d'une butée d'emboîtement de l'élément de raccordement (5) dans ledit conduit flexible (2).

12. Dispositif de raccordement selon au moins la revendication 1 ou la revendication 4,
**caractérisé par le fait**
**que** le conduit flexible est au moins indirectement entouré, sur sa face extérieure radiale, par un flexible tressé qui est bloqué à demeure sur l'élément de raccordement, au voisinage axial de la zone de verrouillage à demeure dudit conduit flexible ; et par le fait que la région extrême évasée dudit conduit flexible, ou l'élément annulaire additionnel, confère un appui radial audit flexible tressé lors du déport radial de ce dernier dans la direction de sa zone de consignation à demeure sur ledit élément de raccordement.
